# EUROPÄISCHE PATENTSCHRIFT

(11) **EP 0 730 106 B1**
(45) Veröffentlichungstag und Bekanntmachung des Hinweises auf die Patenterteilung: **05.09.2001**
(21) Anmeldenummer: 96100382.9
(22) Anmeldetag: 12.01.1996
(51) Int. Cl.: F16D 65/02

(54) **Verfahren zum Entwurf einer Scheibenbremse**
Method of designing a disc brake
Procédé pour dessiner un frein à disque

(30) Priorität: 01.03.1995 DE 19507102
(43) Veröffentlichungstag der Anmeldung: 04.09.1996
(73) Patentinhaber: Dr.Ing.h.c. F. Porsche Aktiengesellschaft, 70435 Stuttgart (DE)
(72) Erfinder: Kappich, Joachim, D-75378 Bad Liebenzell (DE)

(56) Entgegenhaltungen:
- DE-C- 3 736 126
- BURCKHARDT: 'Fahrwerktechnik: Bremsdynamik und Pkw-Bremsanlagen', 1991, VOGEL, WÜRZBURG * Seite 220 - Seite 221 *

## Beschreibung

Die Erfindung bezieht sich auf ein Verfahren zum Entwurf einer Scheibenbremse nach dem Oberbegriff des Anspruchs 1.

Bei Bremsanlagen für Kraftfahrzeuge mit Scheibenbremsen sind bei einem Bremsvorgang besonders hochfrequente Quietschgeräusche störend. Diese treten meist bei niedrigen Bremsdrücken auf, wie sie bei Bremsungen im Stadtverkehr oder bei "stop-and-go" üblich sind. Ein quietschendes Fahrzeug vermittelt einen qualitativ schlechten Eindruck und wird in zunehmendem Maße vom Kunden nicht akzeptiert.

Die Bearbeitung von Bremsquietschproblemen wird besonders durch die oft wechselnden Randbedingungen, wie Temperatur, Luftfeuchte erschwert. Auch haben die den steigenden Fahrzeugleistungen angepassten Bremsen sowie der Leichtbau im Fahrwerkbereich einen Einfluß auf das Entstehen von Quietschgeräuschen beim Bremsen.

Es besteht eine Systemproblematik an der Bremsanlage, da vielzählige Bauteileigenresonanzen sowie verschiedene Bauteilkopplungen bestehen und die breitbandige Anregung durch Reibkräfte ein komplexes Schwingungssystem ergeben. Hauptbauteile dieses Schwingungssystems sind die Bremsscheibe und die Bremsbeläge, welche die beiden Reibpartner darstellen und somit die Stelle der Energieeinleitung für eine Geräuschentstehung bilden. Die Bremsscheibe besitzt ausgeprägte Eigenresonanzen mit geringen Dämpfungswerten mit Grundschwingungen und Oberwellen. Die Reibwerte und die Elastizität der Reibbeläge bestimmen die Anregung der Kopplungseigenschaften zwischen der Bremsscheibe und dem Bremssattel. Als Führung und Widerlager für die Bremsbeläge kommt dem Bremssattel auch eine besondere Rolle bezüglich des gesamten Schwingungssystems zu. Die weiteren im Kraftfluß liegenden Bauteile, wie Radnabe, Radlager und Radträger müssen bei der Lösung von Geräuschproblemen ebenfalls bewertet werden. Die Radnabe bestimmt über ihre Länge die in den Radträger eingeleiteten Momente.

Aus der Druckschrift BURCKHARDT: "Fahrwerktechnik: Bremsdynamik und PKW-Bremsanlagen", 1991, Vogel-Verlag Würzburg, Seiten 220 bis 221, geht ein Bremssattel hervor, bei dem eine teilweise Überdeckung von Projektionen der Bremsscheibe erfolgt, wenn die Projektionen der Bremsbeläge gleichmäßig über den Umfang der Bremsscheibe verteilt auf die Bremsscheibe projeziert werden. Ein Hinweis auf die Auslegung der Länge der Projektion der Bremsbeläge ist indes nicht vorhanden.

Es ist Aufgabe der Erfindung, ein Verfahren zum Entwurf einer Scheibenbremse zu schaffen, mit dem eine Bremsanlage mit einer Bremsscheibe so abgestimmt werden kann, daß Quietschgeräusche beim Bremsvorgang über die Bremsbeläge aufgehoben bzw. vermindert werden können.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch ein bestimmtes Verhältnis von Bremsbelaglänge zum Bremsscheibenumfang bzw. dem mittleren Umfang der wirkenden Reibfläche, die Quietschgeräusche abgebaut bzw. so weit vermindert werden können, daß sie akustisch nicht mehr hörbar sind, wobei die Beläge als Bandpaßfilter für die Eigenresonanzen der Bremsscheibe wirken.

Die Länge der Bremsbeläge ist so ausgelegt, daß sie bei einer Zweikolben-Hinterachsbremse eine Länge von 1/6 des Umfangs der Bremsscheibe aufweisen. Bei einer Vierkolben-Hinterachsbremse beträgt die Länge der Bremsbeläge annähernd 1/8 des Bremsscheibenumfangs. Die Projektioner der Bremsbeläge sollen sich überlappen, damit ein sich ausbildender Schwingungsbauch am Bremsscheibenrand, der sich S-förmig verformenden Bremsscheibe teilweise von den Bremsbelägen überdeckt wird.

Die Bremsscheibe wird beim Bremsen zu einer axialen Plattenschwingung mit mehreren, beispielsweise acht Knoten, angeregt, wobei die Amplituden im Bereich des Scheibenein- und -auslaufes ein Maximum aufweisen. Dabei verformt sich der äußere Bremsscheibenrand S-förmig. Die Bremsbeläge folgen dieser S-förmigen Bewegung und werden zusätzlich in tangentialer Richtung zur Bremsscheibe hin gegenphasig 5 angeregt. Harmonisch zur Bewegung der Bremsscheibe und den Bremsbelägen schwingt der Bremssattel als Parallelogramm mit. Bremssattel und Radträger schwingen als ein Bauteil. Die auftretenden Beschleunigungen und die damit verbundenen Bewegungen sind ähnlich groß wie am Bremssattel selbst. Der Radträger ist oft besonders am bremsscheibenauslaufseitigen Verschraubungspunkt in axialer Richtung empfindlich. So ist bei einer Vierkolben-Bremse die auftretende Verformungsschwingung derjenigen der Zweikolben-Bremse sehr ähnlich. Die Bremsscheibe wird in der zweiten Ordnung, d.h. zu einer Sechs-Knotenschwingung angeregt. Die höchsten Beschleunigungswerte treten dabei im Bremsscheibenauslauf auf.

Ausführungsbeispiele der Erfindung sind in der Zeichnung dargestellt und werden im folgenden näher beschrieben.
Es zeigen
- Fig. 1: eine schematische Darstellung einer Bremsscheibe einer Vierkolben-Bremse mit Bremsbelag,
- Fig. 2: eine Draufsicht zu Fig. 1 auf die Bremsscheibe, welche beim Bremsvorgang mit einer S-förmigen Schwingung dargestellt ist,
- Fig. 3: eine schematische Ansicht auf eine Bremsscheibe einer Zweikolben-Bremse mit Bremsbelag und
- Fig. 4: eine Draufsicht zu Fig. 3 mit einer beim Bremsen zu einer S-förmigen Schwingung angeregten Bremsscheibe.

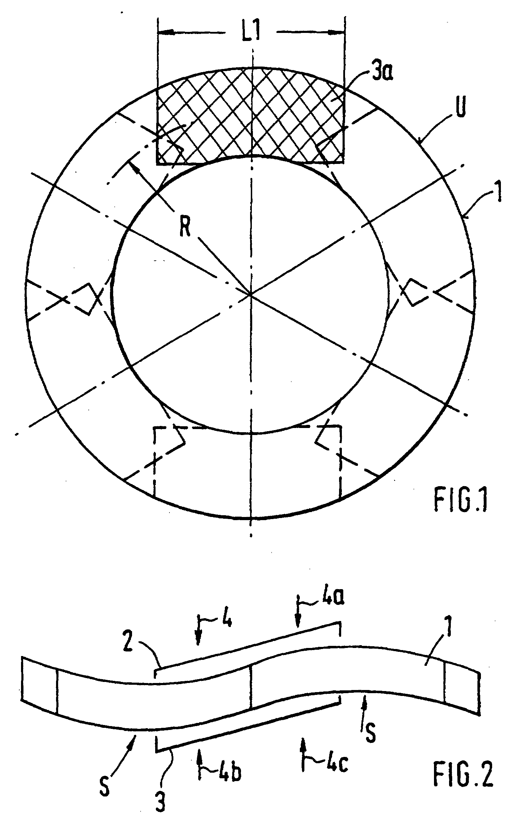

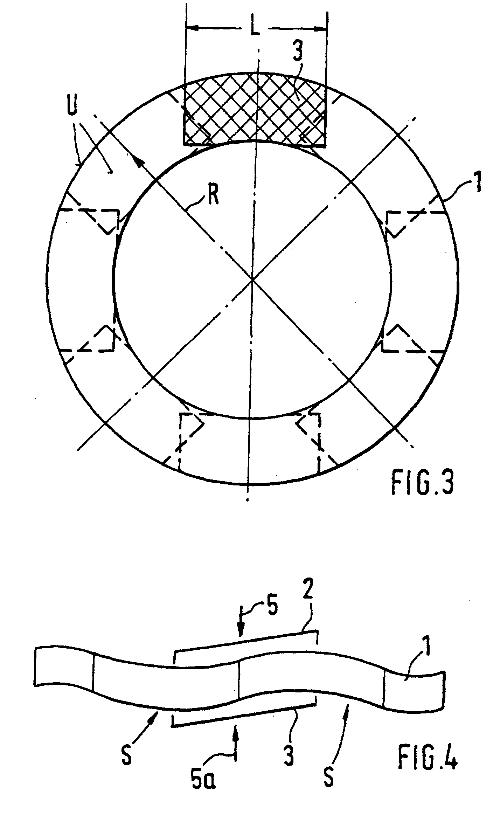

In den Fig. 1 und 3 ist schematisch eine Bremsscheibe 1 mit einem Bremsbelag 3; 3a dargestellt. Die Bremse gemäß der Fig. 1 und 2 weist vier Bremskolben 4, 4a bis 4c und die Bremse gemäß der Fig. 2 und 3 weist zwei Bremskolben 5; 5a auf. In den Draufsichten gemäß der Fig. 2 und 4 der Bremsscheibe sind diese beim Bremsvorgang mit einer einnehmenden S-förmigen Schwingung dargestellt.

Die Länge L; L1 der Bremsbeläge 3; 3a bei einer Zweikolben-Bremse beträgt annähernd 1/8 des Scheibenumfanges U. Der Umfang U kann auch auf dem Radius R liegen, d.h. mittig der wirkenden Reibfläche der Bremsscheibe.

Die Bremsbeläge sollen sich überlappen, so daß bei S-förmiger Schwingungsform die Schwingungsbäuche S teilweise oder ganz überdeckt sind.

In den Fig. 1 und 3 sind neben den Bremsbelägen 3 zur Veranschaulichung weitere Projektioner der Bremsbeläge in gestrichelten Linien eingezeichnet, die die Aufteilung über den Umfang U der Bremsscheibe darstellen sollen.

Bei einer kleinen Zweikolben-Bremse liegt die Quietschresonanzfrequenz beispielsweise bei 2,8 kHz und eine Acht-Knotenschwingung der freien Bremsscheibe bei 3,3 kHz. Mit einer steiferen Bremsscheibe (Acht-Knotenschwingung bei 3,3 kHz) zeigt die Bremse eine um den gleichen Betrag von 0,5 kHz erhöhte Quietschfrequenz.

Bei der großen Vierkolben-Bremse ist ebenfalls eine Frequenzverschiebung von der freien Eigenschwingung (Sechs-Knotenschwingung 2,2 kHz) zur Quietschfrequenz 1,9 kHz vorhanden. Die Verschiebung zu einer tieferen Quietschresonanzfrenquenz kommt durch die dynamische Ankopplung der Bremsbelag- und Bremssattelmasse an der Bremsscheibe zustande.

Aus dem Spektrum der freien Scheibenschwingungen tritt immer nur eine Frequenz verschoben um den Anteil der Massenankopplung auf. Welche dieser Schwingungsmoden aus dem Spektrum quietschrelevant ist, wird durch das Verhältnis von Bremsscheibenumfang U und Belaglänge L; L1 bestimmt.

Bei der kleinen Zweikolben-Bremse (Acht-Knotenschwingung) paßt die Belaglänge ca. acht Mal auf den Umfang der Bremsscheibe 1. Die Belaglänge L1 der Vierkolben-Bremse kann sechs Mal auf den Bremsscheibenumfang U verteilt werden, d.h. die Belaglänge L1 wird als sog. Bandpaßfilter für die Eigenresonanzen der Bremsscheibe 1 und legt somit die Quietschresonanzfrequenz fest.

Die Entstehung der Koppelresonanz läßt sich durch eine Messung bestätigen. Genau in dem Bremsdruckbereich, in dem das Bremsenquietschen auftritt, bricht die Scheibenresonanz (sechs Knoten, 2,2 kHz) zusammen und es entsteht eine neue Resonanz bei 1,9 kHz, die Quietschresonanzfrequenz. Die Breite der neuen Resonanz entspricht genaue der Streuung des Quietschgeräusches.

## Patentansprüche

1. Verfahren zum Entwurf einer Scheibenbremse für ein Kraftfahrzeug mit einer Bremsscheibe, die in einem Bremssattel beidseitig mit Bremsbelägen in Eingriff bringbar sind und die Bremsbeläge zurn Bremsen von mindestens zwei Bremskolben beaufschlagbar sind, **gekennzeichnet** durch folgende Schritte:
- Projezieren der Bremsbeläge (3; 3a) auf die Bremsscheibe (1) entsprechend der Zahl der Schwingungsknoten einer für ein Quietschen relevanten Eigenschwingung der Bremsscheibe (1) in gleichmäßiger Verteilung über den Umfang (U) der Bremsscheibe (1)
- Wahl einer Umfangslänge (L,L1) der Bremsbeläge (3; 3a) so, daß sich die Projektionen der Bremsbeläge (3; 3a) teilweise überdecken.

2. Verfahren nach Anspruch 1, **dadurch gekennzeichnet,** daß die relevanten Eigenschwingungen der Bremsscheibe (1) 6 oder 8 Schwingungsknoten aufweisen.

## Claims

1. A method of designing a disc brake for a motor vehicle with a brake disc, which in a brake calliper can be brought into engagement on both sides with brake pads and the brake pads can be acted upon by at least two brake pistons for braking purposes, **characterized by** the following steps:
- arranging the brake pads (3; 3a) on the brake disc (1) in accordance with the number of vibration nodes of a characteristic vibration of the brake disc (1) relevant for squealing in a uniform distribution over the periphery (**U**) of the brake disc (1),
- selecting a peripheral length (**L**, **L1**) of the brake pads (3; 3a) in such a way that the projections of the brake pads (3; 3a) overlap in part.

2. A method according to Claim 1, **characterized in that** the relevant characteristic vibrations of the brake disc (1) have 6 or 8 vibration nodes.

## Revendications

1. Procédé pour projeter un frein à disque d'un véhicule automobile comportant un disque de frein qui peut être amené en engagement dans un étrier de frein, des deux côtés, avec des garnitures de frein, et les garnitures de frein peuvent être sollicitées pour le freinage, par au moins deux pistons de frein, **caractérisé par** les étapes suivantes :
- projection des garnitures de frein (3 ; 3a) sur le disque de frein (1) en fonction du nombre de noeuds d'oscillation d'une auto-oscillation du disque de frein (1), importante pour un couinement, dans une distribution régulière sur la circonférence (U) du disque de frein (1),
- choix d'une longueur circonférentielle (L, L1) des garnitures de frein (3 ; 3a) de manière que les projections des garnitures de frein (3 ; 3a) se recouvrent partiellement.

2. Procédé selon la revendication 1, **caractérisé en ce que** les auto-oscillations importantes du disque de frein (1) présentent 6 ou 8 noeuds d'oscillation.
